# EUROPÄISCHE PATENTANMELDUNG

(11) **EP 4 298 904 A1**
(43) Veröffentlichungstag der Anmeldung: **03.01.2024**
(21) Anmeldenummer: 23401017.1
(22) Anmeldetag: 30.05.2023
(51) Int. Cl.: A01M 7/00, A01M 9/00, A01B 79/00

(54) **VERFAHREN ZUM AUSBRINGEN VON SPRITZMITTEL AUF EINE LANDWIRT- SCHAFTLICHE NUTZFLÄCHE MITTELS EINER LANDWIRTSCHAFTLICHEN SPRITZVORRICHTUNG**

(30) Priorität: 29.06.2022 DE 102022116168
(71) Anmelder: Amazonen-Werke H. Dreyer SE & Co. KG, 49205 Hasbergen (DE)
(72) Erfinder: Homann, Maximilian, 33142 Brenken (DE)

(57) **Zusammenfassung**

Verfahren zum Ausbringen von Spritzmittel (S), bei dem ein Feldabschnitt der Nutzfläche anhand mehrerer Erfassungs- und/oder Auswertungsausschnitte (21A-21D) einer Erfassungseinrichtung (20A, 20B) erfasst wird, und auf dem Feldabschnitt sich befindliche Pflanzen (P) anhand einer Auswerteeinrichtung (200) detektiert werden, wobei das Spritzmittel (S) selektiv über ausgewählte Ausbringorgane (12, 13) abgegeben wird, welche dazu eingerichtet sind, dass Spritzmittel (S) auf einer von mehreren von Spritzfächern der Ausbringorgane (12, 13) abhängigen Sektionen (N1-N4) des Feldabschnitts zu applizieren. Um ein Verfahren zum Ausbringen von Spritzmittel (S) so zu gestalten, dass Pflanzen (P) im Randbereich derartiger Sektionen (N1-N4) in einfach umsetzbarer Weise mit einer höheren Zuverlässigkeit appliziert werden, ist vorgesehen, dass die Ausbringorgane (12, 13) derart gegenüber den Erfassungs- und/oder Auswertungsausschnitten (21A-21D) versetzt sind, dass wenigstens einer einzelnen Sektion (N1-N4) mehrere, insbesondere unterschiedliche, Erfassungs- und/oder Auswertungsausschnitte (21A-21D) zugeordnet sind, und dass eine oder mehrere in einem der Erfassungs- und/oder Auswertungsausschnitte (21A-21D) detektierte Pflanzen (P) über paar- und/oder gruppenweise ausgewählte Ausbringorgane (12, 13) mit Spritzmittel (S) appliziert werden.

## Beschreibung

Die Erfindung betrifft ein Verfahren zum Ausbringen von Spritzmittel auf eine landwirtschaftliche Nutzfläche mittels einer landwirtschaftlichen Spritzvorrichtung gemäß dem Oberbegriff des Patentanspruches 1 und eine landwirtschaftliche Spritzvorrichtung zum Ausbringen von Spritzmittel auf eine landwirtschaftliche Nutzfläche gemäß dem Oberbegriff des Patentanspruches 8.

Zum Ausbringen von Spritzmittel, wie etwa Unkraut- und/oder Schädlingsbekämpfungsmittel, auf landwirtschaftlich genutzten Nutzflächen werden vermehrt Spritzvorrichtungen eingesetzt, welche neben einer Vielzahl von Ausbringorganen, insbesondere Spritzdüsen, auch ein oder mehrere Erfassungseinrichtungen zum Erfassen von Feldabschnitten aufweisen. Derartige Erfassungseinrichtungen sind dabei häufig an der Spritzvorrichtung selbst und/oder einer der Spritzvorrichtung zugeordneten Zugmaschine befestigt und während der Ausbringung auf die Nutzfläche, insbesondere auf der Nutzfläche befindliche Pflanzen wie beispielsweise Unkräuter, Wildbewuchs oder dergl., ausgerichtet. Anhand einer elektronischen Auswerteeinrichtung, welche der einen oder den mehreren Erfassungseinrichtungen zugeordnet ist, werden die Pflanzen detektiert.

Weiterhin ist, beispielsweise aus der WO 2018/154490 A1, bekannt, das Spritzmittel selektiv über zumindest eines der mehreren an der Spritzvorrichtung angeordneten und von der Auswerteeinrichtung anhand der detektierten Pflanzen ausgewählten Ausbringorgane abzugeben. Das Spritzmittel wird dabei, insbesondere nach Art einer sogenannten Spot-Applikation, über die Ausbringorgane jeweils zumindest im Wesentlichen auf einer von mehreren in etwa parallel zur Fahrtrichtung verlaufenden und von Spritzfächern der Ausbringorgane abhängige Sektionen des Feldabschnitts appliziert. Mit anderen Worten wird das Spritzmittel dabei von wenigstens einem ersten Ausbringorgan auf einer ersten Sektion und von wenigstens einem dazu, insbesondere unmittelbar, benachbarten zweiten Ausbringorgan auf einer zur ersten, insbesondere unmittelbar, benachbarten zweiten Sektion usw. auf dem Feldabschnitt appliziert.

Die Druckschrift WO 2021/009710 A1 schlägt ein Detektieren der Pflanzen anhand mehrerer einzelner Erfassungs- und/oder Auswertungsausschnitte innerhalb eines erfassten Feldabschnitts vor. Die einzelnen Erfassungs- und/oder Auswertungsausschnitte entsprechen hierbei, insbesondere in der Breite gesehen, zumindest im Wesentlichen den einzelnen Sektionen auf denen das Spritzmittel, insbesondere nach Art der Spot-Applikation und/oder einer Einzelpflanzenbehandlung, über eines der mehreren Ausbringorgane applizierbar ist. Sobald hierbei wenigstens eine Pflanze innerhalb eines Erfassungs- und/oder Auswertungsausschnitts und damit einer Sektion detektiert wird, wird das Spritzmittel über das jeweilige der Sektion und/oder dem Erfassungs- und/oder Auswertungsausschnitt zugeordnete Ausbringorgan ausgebracht und/oder appliziert.

Problematisch hierbei ist, dass die Position, Ausrichtung und/oder Abmessungen eines jeweiligen Erfassungs- und/oder Auswertungsausschnitts, insbesondere in der Breite gesehen, zumindest in etwa denen der jeweiligen zugeordneten Sektionen und/oder Ausbringorgane entsprechen bzw. sich ein Erfassungs- und/oder Auswertungsausschnitt standardmäßig nur über eine Sektion des Feldabschnitts erstreckt. Pflanzen die im Randbereich eines solchen Erfassungs- und/oder Auswertungsausschnitts detektiert werden, werden somit bisher nur von dem wenigstens einen Ausbringorgan, welches der jeweiligen Sektion zugeordnet ist, mit Spritzmittel appliziert und somit häufig unzureichend mit Spritzmittel benetzt.

Die der Erfindung zugrunde liegende Aufgabe besteht somit darin, ein Verfahren zum Ausbringen von Spritzmittel und/oder eine landwirtschaftliche Spritzvorrichtung so zu gestalten, dass Pflanzen im Randbereich von Sektionen eines Feldabschnitts in einfach umsetzbarer Weise mit einer höheren Zuverlässigkeit appliziert werden.

Diese Aufgabe wird erfindungsgemäß dadurch gelöst, dass die Ausbringorgane, insbesondere deren Spritzfächer, derart gegenüber den Erfassungs- und/oder Auswertungsausschnitten versetzt sind, dass wenigstens einer einzelnen Sektion mehrere, insbesondere unterschiedliche, Erfassungs- und/oder Auswertungsausschnitte zugeordnet sind, und dass eine oder mehrere in einem der Erfassungs- und/oder Auswertungsausschnitt detektierte Pflanzen über paar- und/oder gruppenweise ausgewählte Ausbringorgane mit Spritzmittel appliziert werden.

In Folge dieser Maßnahme werden innerhalb, insbesondere eines Randbereichs, einer Sektion detektierte Pflanzen über mehrere, vorzugsweise unmittelbar zueinander benachbarte, Ausbringorgane mit Spritzmittel appliziert, wodurch eine besonders zuverlässige Benetzung derartiger Pflanzen erreicht ist. Dies hat, insbesondere bei Spot-Applikationen oder Einzelpflanzenbehandlungen, den Vorteil, dass sogenannte Resistenzbildungen unzureichend benetzter Unkräuter oder dergl. zumindest nahezu ausgeschlossen sind. Besonders bevorzugt wird dies dadurch erreicht, dass wenigstens einer, vorzugsweise jeder, der Erfassungs- und/oder Auswertungsausschnitte sich zumindest teilweise über mehrere unterschiedliche Sektionen des jeweiligen Feldabschnitts erstreckt.

Die Ausbringorgane sind hierbei vorzugsweise mit seitlichem Abstand zueinander verteilt an einem, insbesondere pendelnd gelagerten, Spritzgestänge der Spritzvorrichtung angeordnet. Ferner bevorzugt weisen unmittelbar benachbart angeordnete Ausbringorgane einen definierten Abstand von etwa 15 cm bis 35 cm, insbesondere etwa 25 cm, auf. Alternativ oder zusätzlich sind auch Abstände von etwa 10 bis 40 cm oder mehr denkbar. Die Ausbringorgane sind besonders bevorzugt derart zueinander angeordnet und/oder beabstandet, dass deren Spritzfächer auf einer Auftrefffläche des Feldabschnitts und damit die benachbarten Sektionen zumindest nahezu unmittelbar aneinander angrenzen oder alternativ geringfügig überlappen.

Eine einzelne Sektion definiert hierbei einen Bereich eines Feldabschnitts, welcher sich unterhalb eines jeweiligen Ausbringorgans befindet und während der Ausbringung durch den Spritzfächer des jeweiligen Ausbringorgans erreichbar und/oder applizierbar ist. Insbesondere ist dabei vorgesehen, dass sich ein gesamter Feldabschnitt, welcher sich unterhalb des Spritzgestänges der Spritzvorrichtung befindet, in quer zur Fahrtrichtung aufeinanderfolgende streifenartige Sektionen, unterteilt bzw. unterteilbar ist. Mit anderen Worten bringt somit jedes der Ausbringorgane das Spritzmittel in jeweils separat den jeweiligen Ausbringorganen zugeordnete Sektionen aus. Die Breite einer Sektion ist dabei insbesondere abhängig vom vertikalen Abstand eines jeweiligen Ausbringorgans zum Boden bzw. zur Pflanze und/oder von der Bereite bzw. dem Spreizwinkel des Spritzfächers.

Darüber hinaus ist vorzugsweise vorgesehen, dass anhand der jeweiligen Erfassungs- und/oder Auswertungsausschnitte unterschiedliche Konfigurationen bzw. Zusammenstellungen gruppierter Ausbringorgane bzw. Ausbringorganpaare ausgewählt und/oder angesteuert werden. Beispielsweise soll dabei durch einen ersten Erfassungs- und/oder Auswertungsausschnitt eine erste Gruppe, einen zweiten Erfassungs- und/oder Auswertungsausschnitt eine zweite Gruppe, einen dritten Erfassungs- und/oder Auswertungsausschnitt eine dritte Gruppe usw. der Ausbringorgane aktiviert werden. Ferner bevorzugt kann dabei auch ein einzelnes Ausbringorgan unterschiedlichen Gruppen zugeordnet sein, so dass das einzelne Ausbringorgan beispielsweise der ersten und der zweiten Gruppe von Ausbringorganen zugeordnet ist. Mit einer solchen Ausführung ist eine Spritzvorrichtung mit besonders flexibel einsetzbaren und/oder konfigurierbaren Ausbringorganen geschaffen, welche außerdem vergleichsweise einfach im Aufbau ausgeführt ist. Durch eine derartige Gruppierung der Ausbringorgane ist wenigstens eines der Ausbringorgane dazu eingerichtet, bedarfsgerecht entweder das jeweilige links davon benachbarte Ausbringorgan und/oder das jeweilige rechts davon benachbarte Ausbringorgan beim Applizieren der Spritzflüssigkeit zu unterstützen.

Die Ausbringorgane sind vorzugsweise jeweils nach Art einer einzelnen Spritzdüse ausgebildet, welche besonders bevorzugt nach Art von PWM bzw. PWFM steuerbar und/oder regelbar ist. Alternativ oder zusätzlich dazu ist auch denkbar, dass die Ausbringorgane jeweils nach Art eines Mehrfachdüsenkörpers mit jeweils mehreren auswählbaren und/oder umschaltbaren Spritzdüsen ausgebildet sind.

In einer bevorzugten Ausführungsform des erfindungsgemäßen Verfahrens werden zumindest im Randbereich einer Sektion detektierte Pflanzen über paar- und/oder gruppenweise ausgewählte Ausbringorgane mit Spritzmittel appliziert. Sobald wenigstens eine Pflanze innerhalb eines einzelnen Erfassungs- und/oder Auswertungsausschnittes und damit einer einzelnen einem Ausbringorgan zugeordneten Sektion detektiert wird, werden wenigstens zwei zu einer Gruppe zugeordneter Ausbringorgane zum Ausbringen der Spritzflüssigkeit freigegeben und/oder aktiviert. Bei einer derartigen Ausführungsform ist somit sichergestellt, dass eine detektiere Pflanze stets mit ausreichender Menge und/oder Benetzung der Spritzflüssigkeit appliziert wird. Die Freigabe und/oder Aktivierung der Ausbringorgane erfolgt dabei insbesondere derart, dass die Spritzflüssigkeit zumindest nahezu ausschließlich auf die jeweilige detektierte Pflanze ausgebracht wird. Hierzu können von der Auswerteeinrichtung unter anderem die Geschwindigkeit der Spritzvorrichtung, die Positionen und/oder Abstände der jeweiligen Ausbringorgane und Pflanzen, die Austrittsgeschwindigkeit und/oder Ausbringdauer der Spritzflüssigkeit usw. berücksichtigt werden. Die Auswerteeinrichtung kann hierbei alternativ oder zusätzlich auch dazu eingerichtet sein, zu unterscheiden ob sich eine jeweilige detektiere Pflanze im Randbereich oder zumindest in etwa Mittig innerhalb einer Sektion befindet, sodass beispielsweise bei einer im Randbereich positionierten Pflanze, eine Gruppe, das heißt mehrere benachbarte Ausbringorgane, oder bei einer zumindest in etwa Mittig positionierten Pflanze nur ein einzelnes Ausbringorgan aktiviert werden.

In einer Weiterbildung des erfindungsgemäßen Verfahrens sind die Erfassungs- und/oder Auswertungsausschnitte derart zu den Ausbringorganen, insbesondere Spritzfächern, platziert und/oder ausgerichtet, dass der Randbereich einer Sektion und/oder die Randbereiche mehrerer, insbesondere unmittelbar benachbarter, Sektionen gemeinsam über einen zumindest im Wesentlichen mittleren Bereich eines Erfassungs- und/oder Auswertungsausschnitts erfasst werden. Die Erfassungs- und/oder Auswertungsausschnitte weisen hierbei jeweils zwei gegenüberliegende seitliche Enden bzw. Ränder auf, wobei die jeweiligen seitlichen Enden bzw. Ränder eines Erfassungs- und/oder Auswertungsausschnitts in unterschiedlichen, vorzugsweise benachbarten, Sektionen platziert sind. Dies hat den Vorteil, dass im Randbereich von Sektionen und/oder zwischen zwei Sektionen bzw. Ausbringorganen befindliche Pflanzen besonders präzise erfassbar und/oder detektierbar sind.

In einer anderen bevorzugten Ausführungsform des erfindungsgemäßen Verfahrens erstreckt sich wenigstens einer der Erfassungs- und/oder Auswertungsausschnitte von einem zumindest in etwa mittleren Bereich einer ersten Sektion bis zu einem zumindest in etwa mittleren Bereich einer, insbesondere unmittelbar zur ersten Sektion benachbarten, zweiten Sektion. Mit anderen Worten bedeutet dies, dass im Randbereich einer oder mehrerer aneinander grenzender Sektionen positionierte bzw. befindliche Pflanzen anhand eines zumindest in etwa mittleren Bereich eines jeweiligen Erfassungs- und/oder Auswertungsausschnitts erfasst und/oder detektiert werden. Die einzelnen Erfassungs- und/oder Auswertungsausschnitte verlaufen dabei während der Ausbringung vorzugsweise zumindest in etwa mittig zu den jeweiligen Randbereichen, insbesondere Sektionsgrenzen, zweier benachbarter Sektionen des Feldabschnitts. Hierdurch ist erreicht, dass die Übergänge zwischen zwei oder mehreren Sektionen stets über einen durchgängigen Erfassungs- und/oder Auswertungsausschnitt erfasst und/oder ausgewertet werden, wodurch Detektionslücken oder dergl. an dem jeweiligen Feldabschnitt zumindest nahezu ausgeschlossen sind.

Ferner bevorzugt wäre auch denkbar, dass ein jeweiliger Feldabschnitt mittels unterschiedlicher Erfassungseinrichtungen und/oder Erfassungs- und/oder Auswertungsausschnitte der Spritzvorrichtung erfasst und/oder ausgewertet wird. Vorzugsweise können erste und zweite Erfassungs- und/oder Auswertungsausschnitte vorhanden sein, wobei die ersten Erfassungs- und/oder Auswertungsausschnitte gegenüber den Ausbringorganen versetzt und zum gruppenweise Aktivieren der Ausbringorgane vorgesehen sind, und wobei die zweiten Erfassungs- und/oder Auswertungsausschnitte gegenüber den Ausbringorganen bzw. Sektionen zumindest in etwa fluchtend und/oder nicht versetzt angeordnet und zum Aktivieren eines einzelnen Ausbringorgans vorgesehen sind. Mit anderen Worten wird hierbei wenigstens eine einzelne Sektion anhand eines ersten Erfassungs- und/oder Auswertungsausschnitts nur teilweise, vorzugsweise im Randbereich, und anhand eines zweiten Erfassungs- und/oder Auswertungsausschnitts zumindest nahezu über die gesamte Breite erfasst und/der detektiert.

In einer anderen Weiterbildung des erfindungsgemäßen Verfahrens sind die Erfassungs- und/oder Auswertungsausschnitte seitlich um eine zumindest in etwa halbe Spritzfächerbreite, insbesondere Sektionsbreite, zu den Ausbringorganen, insbesondere Spritzfächern, versetzt. Infolge dessen wird unterhalb eines Ausbringorgans und in Fahrtrichtung gesehen eine rechte Hälfte einer linken bzw. ersten Sektion und eine linke Hälfte einer rechten bzw. zweiten Sektion von einem jeweiligen, insbesondere zugeordneten, Erfassungs- und/oder Auswertungsausschnitt erfasst und/oder abgedeckt. Dies hat den Vorteil, dass sämtliche zwischen jeweils zwei Ausbringorganen befindliche Pflanzen anhand eines einzigen Erfassungs- und/oder Auswertungsausschnitts erfasst und/oder detektiert werden.

In einer weiteren bevorzugten Ausführungsform des erfindungsgemäßen Verfahrens wird der Versatz um den die Erfassungs- und/oder Auswertungsausschnitte gegenüber den Ausbringorganen, insbesondere Spritzfächern, versetzt sind vor und/oder während der Ausbringung eingestellt und/oder angepasst. Insbesondere kann hierbei je nach Anwendungsart und/oder Konfiguration der Ausbringorgane vorgesehen sein, dass unterschiedliche Versätze einstellbar und/oder verwendbar sind. Beispielsweise kann eine Spritzvorrichtung sowohl zur Ausbringung nach Art von Einzelpflanzenbehandlung bzw. Spot-Applikation, beispielsweise zur Unkrautbekämpfung, als auch zur Ausbringung nach Art von Flächenbehandlungen, beispielsweise bei Pflanzenschutzmittel, vorgesehen sein. Hierfür kann der Versatz zwischen den Erfassungs- und/oder Auswertungsausschnitten und den zugeordneten Ausbringorganen bzw. Sektionen bedarfsgerecht angepasst werden. Alternativ oder zusätzlich dazu wäre auch denkbar, dass der Versatz in Abhängigkeit von äußeren Einflüssen, wie beispielsweise der Windstärke und/oder Windrichtung, oder dem auszubringenden Spritzmittel anpassbar ist. Die Einstellung und/oder Anpassung kann dabei manuell, insbesondere händisch, von einem Maschinenbediener und/oder automatisiert durch ein der Spritzvorrichtung zugeordnetes Steuer- und/oder Regelsystem vor, während und/oder nach der Ausbringung erfolgen. Weiterhin kann entweder eine softwareseitige bzw. digitale und/oder eine mechanisch basierte Verstellung und/oder Anpassung der Erfassungs- und/oder Auswertungsausschnitte vorgesehen sein. Eine mechanische Verstellung und/oder Anpassung der Erfassungs- und/oder Auswertungsausschnitte kann dabei beispielsweise mittels wenigstens einer der Erfassungseinrichtung und/oder den Ausbringorganen zugeordneten Aktorik realisiert sein. Mittels einer derartigen Ausführungsform ist die Spritzvorrichtung in besonders einfacher Weise auf die jeweilige Anwendungsart und/oder Situation anpassbar, wodurch die Ausbringqualität und/oder Zuverlässigkeit der Benetzung noch weiter gesteigert ist.

In einer weiteren Weiterbildung des erfindungsgemäßen Verfahrens wird der Versatz durch eine Verstellung, insbesondere Verschiebung, wenigstens eines der Ausbringorgane eingestellt und/oder angepasst. Alternativ wäre auch denkbar, dass die eine oder die mehreren Erfassungseinrichtungen verschiebbar entlang der Spritzvorrichtung angeordnet sind. Weiterhin wäre auch alternativ oder zusätzlich dazu denkbar, dass sowohl ein oder mehrere Ausbringorgane als auch ein oder mehrere Erfassungseinrichtungen verstellbar, insbesondere verschiebbar, an der Spritzvorrichtung, vorzugsweise dem Spritzgestänge, angeordnet sind.

Die der Erfindung zugrunde liegende Aufgabe wird ebenso mit einer landwirtschaftliche Spritzvorrichtung, insbesondere Feldspritze, der eingangs genannten Art gelöst, wobei die Ausbringorgane, insbesondere deren Spritzfächer zumindest während der Ausbringung, derart gegenüber den Erfassungs- und/oder Auswertungsausschnitten versetzt sind, dass wenigstens einer einzelnen Sektion mehrere, insbesondere unterschiedliche, Erfassungs- und/oder Auswertungsausschnitte zugeordnet sind, und dass eine oder mehrere in einem Erfassungs- und/oder Auswertungsausschnitt detektierbare Pflanzen über paar- und/oder gruppenweise auswählbare Ausbringorgane mit Spritzmittel applizierbar sind. Hinsichtlich der Vorteile und Modifikationen der erfindungsgemäßen Spritzvorrichtung wird zunächst auf die Vorteile und Modifikationen des erfindungsgemäßen Verfahrens verwiesen.

Die Erfassungs- und/oder Auswertungsausschnitte sind hierbei vorzugsweise derart angeordnet, dass ein oder mehrere, insbesondere alle, Erfassungs- und/oder Auswertungsausschnitte jeweils auf mehreren Sektionen platziert bzw. positioniert sind.

In einer bevorzugten Ausführungsform der erfindungsgemäßen Spritzvorrichtung sind die Erfassungs- und/oder Auswertungsausschnitte derart zu den Ausbringorganen, insbesondere Spritzfächern, platziert und/oder ausgerichtet, dass der Randbereich einer Sektion und/oder die Randbereiche mehrerer, insbesondere unmittelbar benachbarter, Sektionen gemeinsam über einen zumindest im Wesentlichen mittleren Bereich eines Erfassungs- und/oder Auswertungsausschnitts erfassbar sind.

Bei einer besonders bevorzugten Ausführungsform der erfindungsgemäßen Spritzvorrichtung erstreckt sich wenigstens einer der Erfassungs- und/oder Auswertungsausschnitte von einem zumindest in etwa mittleren Bereich einer ersten Sektion bis zu einem zumindest in etwa mittleren Bereich einer, insbesondere unmittelbar zur ersten Sektion benachbarten, zweiten Sektion.

In einer besonders bevorzugten Weiterbildung der erfindungsgemäßen Spritzvorrichtung sind die Erfassungs- und/oder Auswertungsausschnitte seitlich um eine zumindest in etwa halbe Spritzfächerbreite, insbesondere Sektionsbreite, zu den Ausbringorganen, insbesondere Spritzfächern, versetzt.

Bei einer weiteren besonders bevorzugten Ausführungsform der erfindungsgemäßen Spritzvorrichtung ist der Versatz um den die Erfassungs- und/oder Auswertungsausschnitte gegenüber den Ausbringorganen, insbesondere Spritzfächern, versetzt sind vor und/oder während der Ausbringung einstellbar und/oder anpassbar.

In einer weiteren besonders bevorzugten Weiterbildung dererfindungsgemäßen Spritzvorrichtung ist der Versatz durch eine Verstellung, insbesondere Verschiebung, wenigstens eines der Ausbringorgane einstellbar und/oder anpassbar.

Darüber hinaus ist in einer weiteren besonders bevorzugten Ausführungsform der erfindungsgemäßen Spritzvorrichtung die Spritzvorrichtung dazu eingerichtet, ein Verfahren auszuführen, welches nach zumindest einer der beschrieben bevorzugten Ausführungsformen des erfindungsgemäßen Verfahrens ausgebildet ist.

Weitere Einzelheiten der Erfindung sind der Beispielsbeschreibung und den Zeichnungen zu entnehmen. Die Zeichnungen zeigen
- Fig.1: eine landwirtschaftliche Spritzvorrichtung während einer Spritzmittelausbringung nach dem Stand der Technik in schematischer Ansicht von oben;
- Fig.2: eine erfindungsgemäße Spritzvorrichtung während der Spritzmittelausbringung in schematischer Ansicht von oben; und
- Fig.3: die erfindungsgemäße Spritzvorrichtung während der Spritzmittelausbringung in schematischer Ansicht von vorne.

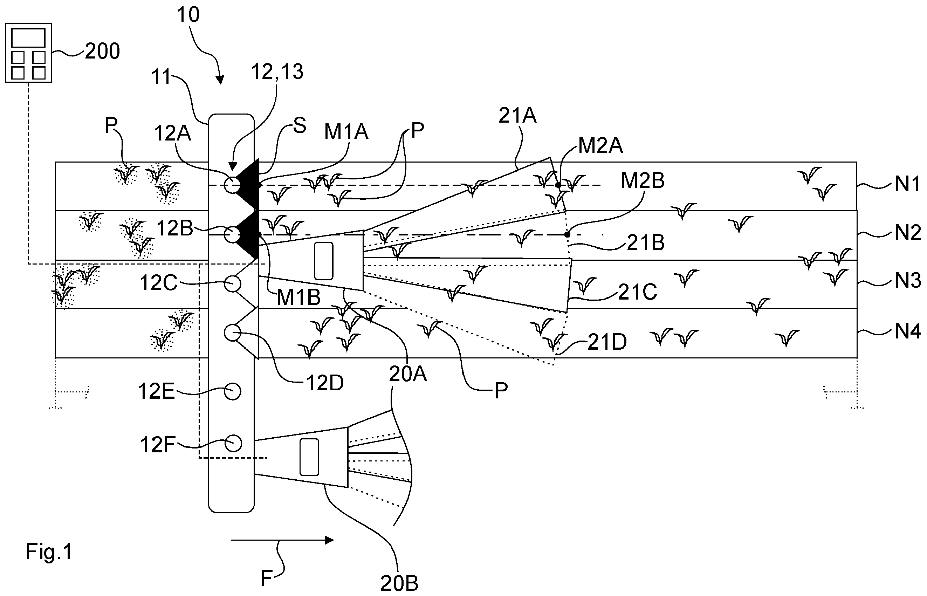

Die als Feldspritze entsprechend des Standes der Technik ausgebildete Spritzvorrichtung 10, welche gemäß Fig.1 ausschnittsweise gezeigt ist, ist zur Ausbringung von Spritzmittel S auf eine landwirtschaftliche Nutzfläche, insbesondere deren Pflanzenbestand und/oder Wildbewuchs P, vorgesehen. Bei dem Spritzmittel S handelt es sich je nach Anwendungsart und/oder Bedarf um Pflanzenschutzmittel und/oder Düngermittel, häufig bei flächigen Applikationen, und/oder um Unkrautbekämpfungsmittel oder dergl., häufig bei Spot-Applikationen bzw. Einzelpflanzenbehandlungen.

Alternativ dazu wäre auch denkbar, dass die Spritzvorrichtung an einem Pflanzenbehandlungsgerät wie beispielsweise einer landwirtschaftlichen Hacke angeordnet ist.

Die Spritzvorrichtung 10 weist gemäß der Fig.1 bis 3 mehrere Erfassungseinrichtungen 20A, 20B auf, welche jeweils dazu eingerichtet sind, einen Feldabschnitt der Nutzfläche anhand mehrerer Erfassungs- und/oder Auswertungsausschnitte 21A-21D zu erfassen. Alternativ dazu wären auch Spritzvorrichtungen 10 mit einer einzigen Erfassungseinrichtung 20A, 20B denkbar, welche eine Vielzahl von Erfassungs- und/oder Auswertungsausschnitten 21A-21D aufweist. Den Erfassungseinrichtungen 20A, 20B sind ferner eine gemeinsame oder mehrere einzelne Auswerteeinrichtungen 200 zugeordnet, welche anhand der mehreren Erfassungs- und/oder Auswertungsausschnitte 21A-21D zur Detektion von auf dem Feldabschnitt sich befindlichen Pflanzen P vorgesehen sind. Die Auswerteeinrichtung 200 kann beispielsweise eine Rechnereinheit und/oder ein Terminal auf der Spritzvorrichtung 10 oder einer der Spritzvorrichtung 10 zugeordneten Zugmaschine, insbesondere einem Traktor, sein. Alternativ oder zusätzlich dazu kann die Auswerteeinrichtung 200 auch ein mobiles Endgerät, z.B. ein Smartphone oder dergl., sein. Die Auswerteeinrichtung 200 ist insbesondere dazu eingerichtet, die Positionen und/oder den Abstand der detektierten Pflanzen P zur Spritzvorrichtung 10 zu bestimmen und/oder zu ermitteln. Ferner kann die Auswerteeinrichtung 200 alternativ oder zusätzlich dazu eingerichtet sein, die Größe, das Entwicklungsstadium, die Type, den Benetzungszustand oder dergl. der Pflanzen P zu bestimmen und/oder zu ermitteln.

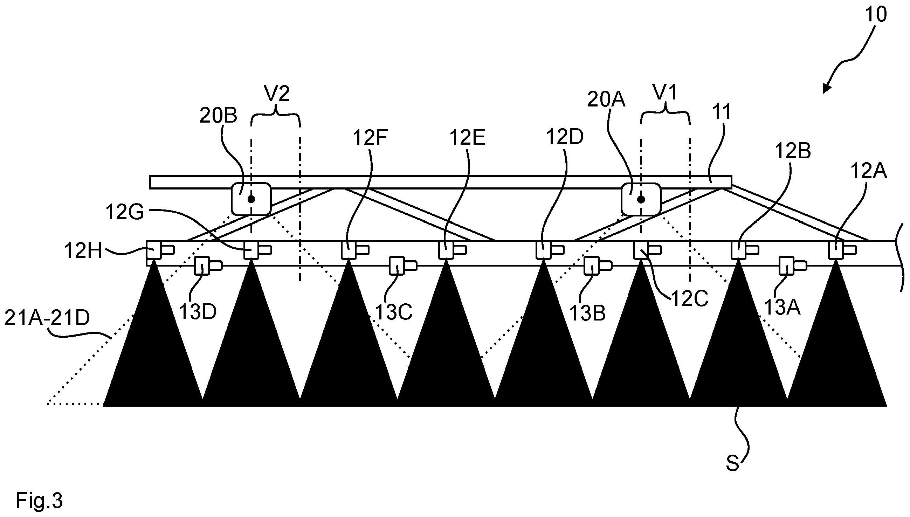

Die Erfassungseinrichtungen 20A, 20B sind gemeinsam mit Ausbringorganen 12, 13, welche zum Ausbringen und/oder Applizieren des Spritzmittels S vorgesehen sind, an einem, insbesondere pendelnd gelagerten und/oderhöhengeführten, Spritzgestänge 11 der Spritzvorrichtung 10 angeordnet und/oder befestigt. Die Ausbringorgane 12, 13 sind dabei mit definiertem Abstand, hier beispielhaft zwischen 25 bis 50 cm, zueinander entlang des Spritzgestänges 11 verteilt angeordnet. Die Ausbringorgane 12, 13 sind ferner als Spritzdüsen ausgebildet. Eine Vielzahl von Spritzdüsen 12A-12H sind dabei derart ausgeführt, dass sie zur Spot-Applikation bzw. Einzelpflanzenbehandlung (alternativ bzw. zusätzlich auch zur Reihenapplikation) geeignet und/oder verwendbar sind. Eine Vielzahl anderer an dem Spritzgestänge 11 angeordneter Spritzdüsen 13A-13D (insb. in Fig.3 zu sehen) sind wiederrum derart ausgeführt, dass sie zur flächigen Spritzmittelausbringung, insbesondere mit sich zumindest teilweise überlappenden Spritzfächern, geeignet und/oder verwendbar sind. Die Ausbringorgane 12, 13 sind in diesem Ausführungsbeispiel als Einzeldüsen ausgebildet, wobei alternativ oder zusätzlich auch Mehrfachdüsenkörper mit umschaltbaren Spritzdüsen denkbar wären. Die Ausbringorgane 12, 13 sind darüber hinaus von der Auswerteeinrichtung 200 anhand der Detektion der Pflanzen Pauswählbar und/oder aktivierbar, wodurch das Spritzmittel S in selektiver Weise über die Ausbringorgane 12, 13 ausbringbar ist.

Die Ausbringung des Spritzmittels S über die jeweiligen Ausbringorgane 12, 13 erfolgt hierbei derart, dass das Spritzmittel S zumindest im Wesentlichen auf einer von mehreren in etwa parallel zur Fahrtrichtung F verlaufenden und von Spritzfächern der Ausbringorgane 12, 13 abhängigen Sektionen N1-N4 des Feldabschnitts applizierbar ist. Mit anderen Worten stellen die Sektionen N1-N4 die Reichweite eines der jeweiligen Sektion N1-N4 zugeordneten Ausbringorgans 12, 13 dar.

In der Fig.1 ist außerdem die bisherige Ausrichtung der einzelnen Ausbringorgane 12, 13 zu den jeweils zugeordneten Erfassungs- und/oder Auswertungsausschnitten 21A-21D zu sehen. Dies ist anhand der angedeuteten Mittelachsen M1A, M1B der Ausbringorgane 12, 13 und der Mittelachsen M2A, M2B der Erfassungs- und/oder Auswertungsausschnitte 21A-21D zu erkennen. Wie eindeutig zu erkennen ist, sind die Ausbringorgane 12, 13 und die jeweils dazu zugeordneten Erfassungs- und/oder Auswertungsausschnitte 21A-21D hierbei gemäß dem Stand der Technik zumindest in etwa mittig zueinander ausgerichtet, was daran zu erkennen ist, dass die jeweiligen Mittelachsen M1AM2B der Ausbringorgane 12, 13 und Erfassungs- und/oder Auswertungsausschnitte 21A-21D entlang jeweils einer gemeinsamen Gerade verlaufen. Aus Gründen der Übersichtlichkeit sind hierbei nur die Mittelachsen M1A-M2B der in dieser Ansicht beiden oberen Ausbringorgane 12A, 12B und Erfassungs- und/oder Auswertungsausschnitte 21A, 21B gezeigt.

Mittels eines derartigen Aufbaus werden anhand der einzelnen Erfassungs- und/oder Auswertungsausschnitten 21A-21D in einer Sektion N1-N2 detektierte Pflanzen P über das der jeweiligen Sektion N1-N2 zugeordnete Ausbringorgan 12, 13 mit Spritzmittel S appliziert. Wird beispielsweise in der äußersten bzw. obersten Sektion N1 eine Pflanze P detektiert, wird anschließend zum passenden Zeitpunkt das dieser Sektion N1 zugeordnete (in diesem Beispiel das äußerste bzw. oberste) Ausbringorgan 12A aktiviert. In einer einzelnen Sektion befindliche Pflanzen P werden somit stets über ein einzelnes Ausbringorgan 12, 13 mit Spritzmittel S appliziert.

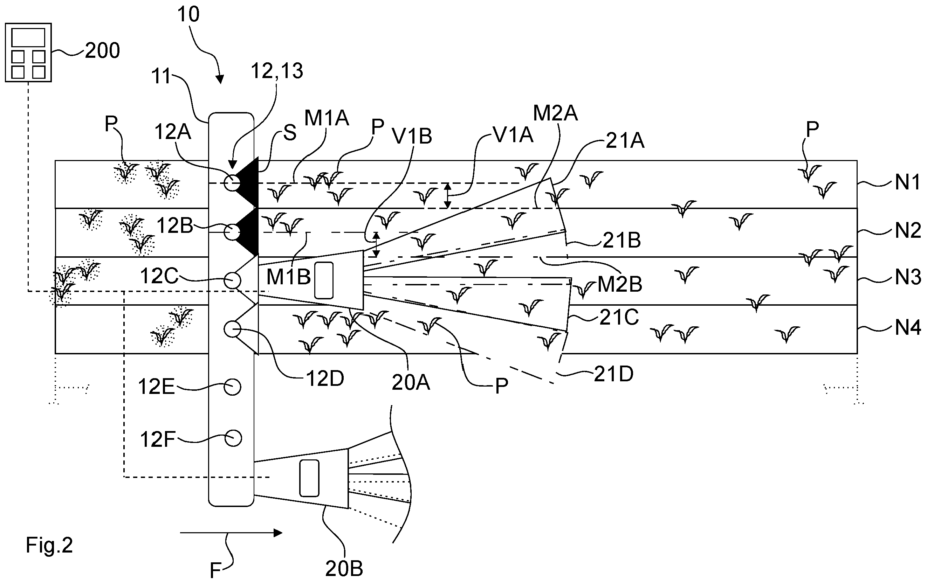

Die Figuren 2 und 3 zeigen eine nach der Erfindung ausgebildete Spritzvorrichtung 10, welche sich durch eine wesentlich zuverlässige Benetzung der im Randbereich der Sektionen N1-N4 befindlichen Pflanzen P gegenüber der Spritzvorrichtung 10 in Fig.1 unterscheidet. Während das grundlegende Funktionsprinzip und/oder der Grundaufbau noch analog zum Aufbau der in Fig.1 beschriebenen Spritzvorrichtung 10 sind, unterscheidet sich jedoch die relative Anordnung und/oder Positionierung zwischen den zueinander zugeordneten Ausbringorgane 12, 13 und den Erfassungs- und/oder Auswertungsausschnitten 21A-21D.

Erfindungsgemäß ist nämlich vorgesehen, dass die Ausbringorgane 12, 13, insbesondere deren Spritzfächer, derart gegenüber den Erfassungs- und/oder Auswertungsausschnitten 21A-21D versetzt sind, dass wenigstens einer einzelnen Sektion N1-N4 mehrere, insbesondere unterschiedliche, Erfassungs- und/oder Auswertungsausschnitte 21A-21D zugeordnet sind. Des Weiteren werden die Ausbringorgane 12, 13 hierbei derart angesteuert und/oder geregelt, dass in einem einzelnen Erfassungs- und/oder Auswertungsausschnitt 21A-21D detektierte Pflanzen über paar- und/oder gruppenweise ausgewählte Ausbringorgane 12, 13 mit Spritzmittel S appliziert werden.

Wie in der Fig.2 ebenfalls gut zu erkennen ist, sind die Erfassungs- und/oder Auswertungsausschnitte 21A-21D derart zu den Ausbringorganen 12, 13, insbesondere den Spritzfächern, platziert und/oder ausgerichtet, dass der Randbereich einer Sektion N1-N4 und/oder die Randbereiche mehrerer, insbesondere unmittelbar benachbarter, Sektionen N1-N4 gemeinsam über einen zumindest im Wesentlichen mittleren Bereich eines Erfassungs- und/oder Auswertungsausschnitts 21A-21D erfasst werden. Wie insbesondere zu erkennen ist, erstrecken sich die Erfassungs- und/oder Auswertungsausschnitte 21A-21D jeweils von einem zumindest in etwa mittleren Bereich einer einzelnen Sektion N1-N4 bis zu einem zumindest in etwa mittleren Bereich einer, insbesondere unmittelbar zu dieser benachbarten, anderen Sektion N1-N4. In diesem Ausführungsbeispiel erstreckt sich z.B. der erste Erfassungs- und/oder Auswertungsausschnitt 21A von der Mitte der ersten Sektion N1 bis zur Mitte der zweiten Sektion N2, während sich der Erfassungs- und/oder Auswertungsausschnitt 21B von der Mitte der zweiten Sektion N2 bis zur Mitte der dritten Sektion N3 usw. erstreckt. Mit anderen Worten sind die einzelnen Erfassungs- und/oder Auswertungsausschnitte 21A-21D jeweils seitlich um eine zumindest in etwa halbe Spritzfächerbreite, insbesondere Sektionsbreite, zu den Ausbringorganen 12, 13, insbesondere deren Spritzfächer, versetzt.

Ein einzelner Erfassungs- und/oder Auswertungsausschnitt 21A-21D ist hierbei ferner stets einem Paar und/oder einer Gruppe von Ausbringorganen 12, 13 zugeordnet. Beispielsweise ist in diesem Ausführungsbeispiel der erste Erfassungs- und/oder Auswertungsausschnitt 21A sowohl dem ersten als auch dem zweiten Ausbringorgan 12A, 12B zugeordnet, während der zweite Erfassungs- und/oder Auswertungsausschnitt 21B sowohl dem zweiten als auch dem dritten Ausbringorgan 12B, 12C usw. zugeordnet ist. Somit werden im Randbereich einer Sektion N1-N4 detektierte Pflanzen P stets über paar- und/oder gruppenweise ausgewählte Ausbringorgane 12, 13 und damit ferner über mehrere Spritzfächer mit Spritzmittel S appliziert.

Alternativ oder zusätzlich ist außerdem vorgesehen, dass der Versatz V1, V2, um den die Erfassungs- und/oder Auswertungsausschnitte 21A-21D gegenüber den Ausbringorganen 12, 13, insbesondere Spritzfächern, versetzt sind, vor und/oder während der Ausbringung eingestellt und/oder angepasst wird. In einer ersten Ausführungsvariante kann dabei vorgesehen sein, dass der Versatz V1, V2 durch eine Verstellung, insbesondere Verschiebung, wenigstens eines der Ausbringorgane 12, 13 eingestellt und/oder angepasst wird. In einer alternativen zweiten Ausführungsvariante kann auch vorgesehen sein, dass der Versatz V1, V2 durch eine Verstellung, insbesondere Verschiebung, wenigstens einer Erfassungseinrichtung 20A, 20B (mechanisch) und/oder der Erfassungs- und/oder Auswertungsausschnitte 21A-21D (softwareseitig) eingestellt und/oder angepasst wird. In einer weiteren alternativen Ausführungsvariante kann auch vorgesehen sein, dass sowohl die Ausbringorgane 12, 13 als auch die Erfassungseinrichtung 20A, 20B und/oder die Erfassungs- und/oder Auswertungsausschnitte 21A-21D zum Anpassen des Versatzes V1, V2 verstellbar, insbesondere verschiebbar, ausgeführt sind.

Des Weiteren kann den Ausbringorganen und/oder den Erfassungseinrichtungen 20A, 20B in einer alternativen Ausführungsform wenigstens eine (in den Figuren nicht gezeigte) Stelleinrichtung, insbesondere ein Aktor, zum Einstellen des Versatzes V1, V2 zugeordnet sein.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichenliste

- 10: Spritzvorrichtung
- 11: Spritzgestänge
- 12, 13: Ausbringorgan
- 12A-12H: Spritzdüsen
- 13A-13D: Spritzdüsen
- 20A, 20B: Erfassungseinrichtung
- 21A-21D: Erfassungs- und/oder Auswertungsausschnitte
- 200: Auswerteeinrichtung
- F: Fahrtrichtung
- M1A, M1B: Mittelachsen der Ausbringorgane
- M2A, M2B: Mittelachsen der Erfassungs- und/oder Auswertungsausschnitte
- N1-N4: Sektionen
- P: Pflanze, Wildbewuchs
- S: Spritzmittel
- V1, V2: Versatz

## Patentansprüche

1. Verfahren zum Ausbringen von Spritzmittel (S) auf eine landwirtschaftliche Nutzfläche mittels einer landwirtschaftlichen Spritzvorrichtung (10), insbesondere Feldspritze, mit den Schritten:
- Erfassen eines Feldabschnitts der Nutzfläche anhand mehrerer Erfassungs- und/oder Auswertungsausschnitte (21A-21D) wenigstens einer an der Spritzvorrichtung (10) angeordneten Erfassungseinrichtung (20A, 20B); und
- Detektieren von auf dem Feldabschnitt sich befindlichen Pflanzen (P) anhand der mehreren Erfassungs- und/oder Auswertungsausschnitte (21A-21D), mittels wenigstens einer der Erfassungseinrichtung (20A, 20B) zugeordneten Auswerteeinrichtung (200);
wobei das Spritzmittel (S) selektiv über zumindest eines von mehreren an der Spritzvorrichtung (10) angeordneten und von der Auswerteeinrichtung (200) anhand der detektierten Pflanzen (P) ausgewählten Ausbringorgane (12, 13) abgegeben wird, welche dazu eingerichtet sind, dass Spritzmittel (S) jeweils zumindest im Wesentlichen auf einer von mehreren in etwa parallel zur Fahrtrichtung (F) verlaufenden und von Spritzfächern der Ausbringorgane (12, 13) abhängigen Sektionen (N1-N4) des Feldabschnitts zu applizieren, **dadurch**
**gekennzeichnet, dass** die Ausbringorgane (12, 13), insbesondere deren Spritzfächer, derart gegenüber den Erfassungs- und/oder Auswertungsausschnitten (21A-21D) versetzt sind, dass wenigstens einer einzelnen Sektion (N1-N4) mehrere, insbesondere unterschiedliche, Erfassungs- und/oder Auswertungsausschnitte (21A-21D) zugeordnet sind, und dass eine oder mehrere in einem der Erfassungs- und/oder Auswertungsausschnitte (21A-21D) detektierte Pflanzen (P) über paar- und/oder gruppenweise ausgewählte Ausbringorgane (12, 13) mit Spritzmittel (S) appliziert werden.

2. Verfahren nach Anspruch 1, **dadurch gekennzeichnet, dass** zumindest im Randbereich einer Sektion (N1-N4) detektierte Pflanzen (P) über paar- und/oder gruppenweise ausgewählte Ausbringorgane (12, 13) mit Spritzmittel (S) appliziert werden.

3. Verfahren nach zumindest einem der vorgenannten Ansprüche 1 und 2,
**dadurch gekennzeichnet, dass** die Erfassungs- und/oder Auswertungsausschnitte (21A-21D) derart zu den Ausbringorganen (12, 13), insbesondere Spritzfächern, platziert und/oder ausgerichtet sind, dass der Randbereich einer Sektion (N1-N4) und/oder die Randbereiche mehrerer, insbesondere unmittelbar benachbarter, Sektionen (N1-N4) gemeinsam über einen zumindest im Wesentlichen mittleren Bereich eines Erfassungs- und/oder Auswertungsausschnitts (21A-21D) erfasst werden.

4. Verfahren nach zumindest einem der vorgenannten Ansprüche 1 bis 3,
**dadurch gekennzeichnet, dass** sich wenigstens einer der Erfassungs- und/oder Auswertungsausschnitte (21A-21D) von einem zumindest in etwa mittleren Bereich einer ersten Sektion (N1-N4) bis zu einem zumindest in etwa mittleren Bereich einer, insbesondere unmittelbar zur ersten Sektion (N1-N4) benachbarten, zweiten Sektion (N1-N4) erstreckt.

5. Verfahren nach zumindest einem der vorgenannten Ansprüche 1 bis 4,
**dadurch gekennzeichnet, dass** die Erfassungs- und/oder Auswertungsausschnitte (21A-21D) seitlich um eine zumindest in etwa halbe Spritzfächerbreite, insbesondere Sektionsbreite, zu den Ausbringorganen (12, 13), insbesondere Spritzfächern, versetzt sind.

6. Verfahren nach zumindest einem der vorgenannten Ansprüche 1 bis 5,
**dadurch gekennzeichnet, dass** der Versatz (V1, V2) um den die Erfassungs- und/oder Auswertungsausschnitte (21A-21D) gegenüber den Ausbringorganen (12, 13), insbesondere Spritzfächern, versetzt sind vor und/oder während der Ausbringung eingestellt und/oder angepasst wird.

7. Verfahren nach Anspruch 6, **dadurch gekennzeichnet, dass** der Versatz (V1, V2) durch eine Verstellung, insbesondere Verschiebung, wenigstens eines der Ausbringorgane (12, 13) eingestellt und/oder angepasst wird.

8. Landwirtschaftliche Spritzvorrichtung (10), insbesondere Feldspritze, zum Ausbringen von Spritzmittel (S) auf eine landwirtschaftliche Nutzfläche, umfassend;
- eine oder mehrere an der Spritzvorrichtung (10) angeordnete Erfassungseinrichtungen (20A, 20B), welche dazu eingerichtet sind, einen Feldabschnitt der Nutzfläche anhand mehrerer Erfassungs- und/oder Auswertungsausschnitte (21A-21D) zu erfassen;
- zumindest eine dem einen oder den mehreren Erfassungseinrichtungen (20A, 20B) zugeordnete Auswerteeinrichtung (200) zur Detektion von auf dem Feldabschnitt sich befindlichen Pflanzen (P) anhand der mehreren Erfassungs- und/oder Auswertungsausschnitte (21A-21D); und
- mehrere an der Spritzvorrichtung (10) angeordnete Ausbringorgane (12, 13), über welche das Spritzmittel (S) in selektiver Weise ausbringbar ist, und welche von der Auswerteeinrichtung (200) anhand der Detektion der Pflanzen (P) auswählbar sind;
wobei das Spritzmittel (S) über die jeweiligen Ausbringorgane (12, 13) zumindest im Wesentlichen auf einer von mehreren in etwa parallel zur Fahrtrichtung (F) verlaufenden und von Spritzfächern der Ausbringorgane (12, 13) abhängigen Sektionen (N1-N4) des Feldabschnitts applizierbar ist,
**dadurch gekennzeichnet, dass** die Ausbringorgane (12, 13), insbesondere deren Spritzfächer, derart gegenüber den Erfassungs- und/oder Auswertungsausschnitten (21A-21D) versetzt sind, dass wenigstens einer einzelnen Sektion (N1-N4) mehrere, insbesondere unterschiedliche, Erfassungs- und/oder Auswertungsausschnitte (21A-21D) zugeordnet sind, und dass eine oder mehrere in einem Erfassungs- und/oder Auswertungsausschnitt detektierbare Pflanzen (P) über paar- und/oder gruppenweise auswählbare Ausbringorgane (12, 13) mit Spritzmittel (S) applizierbar sind.

9. Spritzvorrichtung (10) nach Anspruch 8, **dadurch gekennzeichnet, dass** die Erfassungs- und/oder Auswertungsausschnitte (21A-21D) derart zu den Ausbringorganen (12, 13), insbesondere Spritzfächern, platziert und/oder ausgerichtet sind, dass der Randbereich einer Sektion (N1-N4) und/oder die Randbereiche mehrerer, insbesondere unmittelbar benachbarter, Sektionen (N1-N4) gemeinsam über einen zumindest im Wesentlichen mittleren Bereich eines Erfassungs- und/oder Auswertungsausschnitts (21A-21D) erfassbar sind.

10. Spritzvorrichtung (10) nach zumindest einem der vorgenannten Ansprüche 8 und/oder 9, **dadurch gekennzeichnet, dass** sich wenigstens einer der Erfassungs- und/oder Auswertungsausschnitte (21A-21D) von einem zumindest in etwa mittleren Bereich einer ersten Sektion (N1-N4) bis zu einem zumindest in etwa mittleren Bereich einer, insbesondere unmittelbar zur ersten Sektion (N1-N4) benachbarten, zweiten Sektion (N1-N4) erstreckt.

11. Spritzvorrichtung (10) nach zumindest einem der vorgenannten Ansprüche 8 bis 10, **dadurch gekennzeichnet, dass** die Erfassungs- und/oder Auswertungsausschnitte (21A-21D) seitlich um eine zumindest in etwa halbe Spritzfächerbreite, insbesondere Sektionsbreite, zu den Ausbringorganen (12, 13), insbesondere Spritzfächern, versetzt sind.

12. Spritzvorrichtung (10) nach zumindest einem der vorgenannten Ansprüche 8 bis 11, **dadurch gekennzeichnet, dass** der Versatz (V1, V2) um den die Erfassungs- und/oder Auswertungsausschnitte (21A-21D) gegenüber den Ausbringorganen (12, 13), insbesondere Spritzfächern, versetzt sind vor und/oder während der Ausbringung einstellbar und/oder anpassbar ist.

13. Spritzvorrichtung (10) nach Anspruch 12, **dadurch gekennzeichnet, dass** der Versatz (V1, V2) durch eine Verstellung, insbesondere Verschiebung, wenigstens eines der Ausbringorgane (12, 13) einstellbar und/oder anpassbar ist.
